# EUROPÄISCHE PATENTANMELDUNG

(11) **EP 0 986 232 A2**
(43) Veröffentlichungstag der Anmeldung: **15.03.2000**
(21) Anmeldenummer: 99111540.3
(22) Anmeldetag: 15.06.1999
(51) Int. Cl.: H04M 1/02

(54) **Rotierende Verschlusseinheit für ein tragbares Telefon**

(30) Priorität: 09.09.1998 DE 19841063
(71) Anmelder: ROBERT BOSCH GMBH, 70442 Stuttgart (DE)
(72) Erfinder: Bieneck, Uwe, 21234 Edemissen (DE); Reuter, Markus, 38302 Wolfenbuettel (DE); Edler, Klaus, 31249 Hohenhameln (DE); Lerchner, Henry, 31224 Peine (DE)

(57) **Zusammenfassung**

Bei einem Verschluß für ein tragbares Telefon, die eine Verriegelung durch das Ineinandergreifen eines Schnapphakens in ein Verschlußglied unter dem Einfluß einer Federkraft bewirkt, ist der Schnapphaken fest mit einer Rotationsachse verbunden. Dabei weist der Verschluß eine Tastfläche auf, die ebenfalls fest mit der Rotationsache verbunden ist und mit dem Schnapphaken einen Winkel > 0° bildet.

## Beschreibung

Die Erfindung betrifft eine rotierende Verschlußeinheit, insbesondere eine rotierende Verschlußeinheit bei tragbaren Telefonen.

Das Prinzip einer sogenannten Schnappverschlußeinheit, bei denen eine Verriegelung durch das Einrasten eines Schnapphakens in ein entsprechendes Verschlußglied erreicht wird, ist bekannt. Die Verriegelung wird im allgemeinen durch eine Federkraft bewirkt. Durch das Ausüben einer entsprechenden Gegenkraft wird die Verriegelung wieder gelöst, wobei die Lösekraft auf eine Verlängerung des Schnapphakens ausgeübt wird.

Nachteilig bei den bekannten Verschlußeinheiten ist deren konstruktiver Aufwand und Platzbedarf, die bisher eine Verwendung bei tragbaren Telefonen nicht ermöglichte.

Der Erfindung liegt daher die Aufgabe zugrunde, eine geeignete Verschlußeinheit für tragbare Telefone, sowie eine entsprechende Batterieeinheit und ein derartiges tragbares Telefon zu schaffen, wobei mit einer derartigen Verschlußeinheit beispielsweise eine Batterieeinheit an einem Gehäuse eines tragbaren Telefons befestigt werden kann.

Die Aufgabe wird durch die Merkmale der Ansprüche 1, 3 und 5 gelöst. Bevorzugte Ausgestaltungen der Erfindung sind Gegenstand der Unteransprüche.

In einem erfindungsgemäßen Verschluß für ein tragbares Telefon, die eine Verriegelung durch das Ineinandergreifen eines Schnapphakens in ein Verschlußglied unter dem Einfluß einer Federkraft bewirkt, ist der Schnapphaken fest mit einer Rotationsachse des Verschlusses verbunden.

Vorzugsweise weist die Verschlußeinheit eine Tastfläche auf, die fest mit der Rotationsache verbunden ist und mit dem Schnapphaken einen Winkel > 0° bildet, so daß sich ein einstückige Schnapphakeneinheit ergibt. Mit anderen Worten, die durch den Schnapphaken und die Achse gebildete Schnapphakenebene ist von der durch die Tastfläche und die Rotationsachse gebildete Tastflächenebene verschieden.

Vorzugsweise wird der erfindungsgemäße Verschluß in einer Batterieeinheit eines tragbaren Telefons verwendet, wobei die Batterieeinheit mittels einer oder mehrerer Verschlüsse an dem Gehäuse des tragbaren Telefons befestigt ist.

Vorzugsweise ist die Tastfläche zum Lösen der Verriegelung an die Kontur des Gehäuses der Batterieeinheit angepaßt.

Bei der Verwendung des Verschlusses in einem tragbaren Telefon ist das Verschlußglied am Gehäuse des tragbaren Telefons angeordnet, während der Schnapphaken, die Tastfläche, die Rotationsachse sowie die die Federkraft erzeugende Feder an dem Gehäuse der Batterleeinheit angeordnet sind.

Ein bevorzugte Ausführungsform der Erfindung wird nachfolgend anhand der Zeichnungen erläutert.
Fig. 1 zeigt einen Querschnitt durch einen erfindungsgemäßen Verschluß,
Fig. 2a und Fig. 2b zeigen jeweils eine perspektivische Vorder- und Rückansicht der Schnapphakeneinheit, und
Fig.3 zeigt eine perspektivische Ansicht der Rückseite eines tragbaren Telefons mit einer Batterieeinheit.

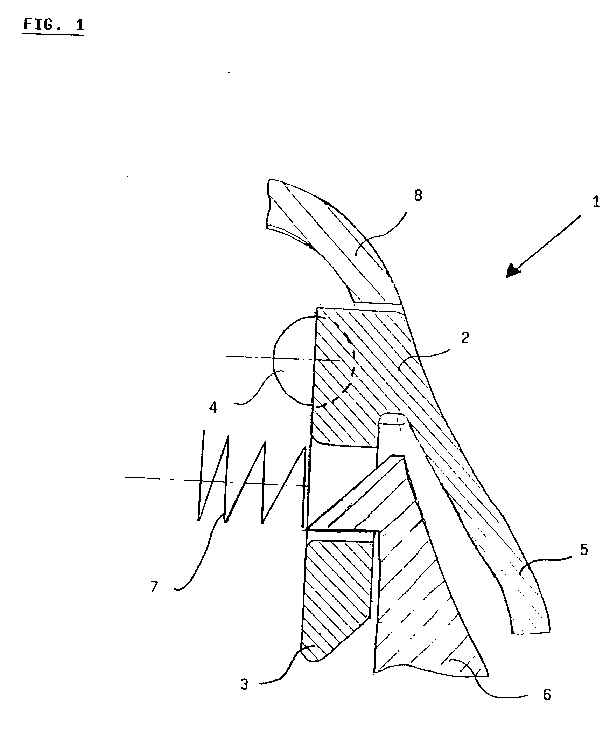

Fig. 1 zeigt eine Querschnittsansicht durch einen erfindungsgemäßen Schnapphakenverschluß 1, bestehend aus einer Schnapphakeneinheit 2, die über ein Verschlußglied 6 verriegelt. Die Schnapphakeneinheit 2 umfaßt dem eigentlichen Schnapphaken 3, der fest mit einer Rotationsachse 4 verbunden ist. Die Schnapphakeneinheit 2 weist ferner eine Tastfläche 5 auf, die mit dem Schnapphaken 3 unter einem Winkel > 0° über die Rotationsachse 5 fest verbunden ist, d.h. die Tastfläche 5, der Schnapphaken 3 und die Rotationsachse bilden die zusammenhängende einstückige Schnapphakeneinheit 2. Die Kontur der Tastfläche 5 paßt sich in der Form an das Gehäuse 8 einer Batterieeinheit eines tragbaren Telefons an. Das bereits erwähnte Verschlußglied 6 greift zur Verriegelung des Verschlusses 1 in den Schnapphaken 3 ein. Die notwendige Haltekraft wird durch eine Feder 7 erzeugt. Durch Erzeugen eines Druckes auf die Tastfläche 5 wird der Schnapphaken 3 aus seiner Verriegelungsstellung gedreht und der Verschluß 1 geöffnet. Wird kein Druck auf die Tastfläche 5 erzeugt, so wird durch die Feder 7 der Schnapphaken 3 wieder in die Verriegelungsstellung gedreht. Das Verschlußglied 6, das ebenfalls Im Querschnitt in einer Hakenform ausgebildet sein kann, ist in der dargestellten bevorzugten Ausführungsform Bestandteil des Gehäuses 9 eines tragbaren Telefons.

Fig. 2a zeigt eine Vorderansicht der Schnapphakeneinheit 2 mit der Rotationsachse 4 sowie der damit fest verbundenen Tastfläche 5.

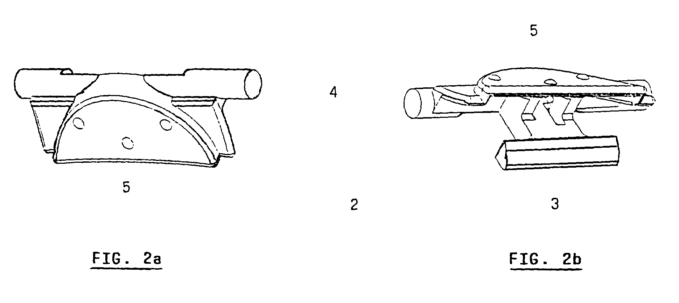

Fig. 2b zeigt eine Rückansicht der Schnapphakeneinheit 2 mit der Rotationsachse 4 sowie dem damit verbundenen Schnapphakens 3 und der teilweise zu sehenden Tastfläche 5.

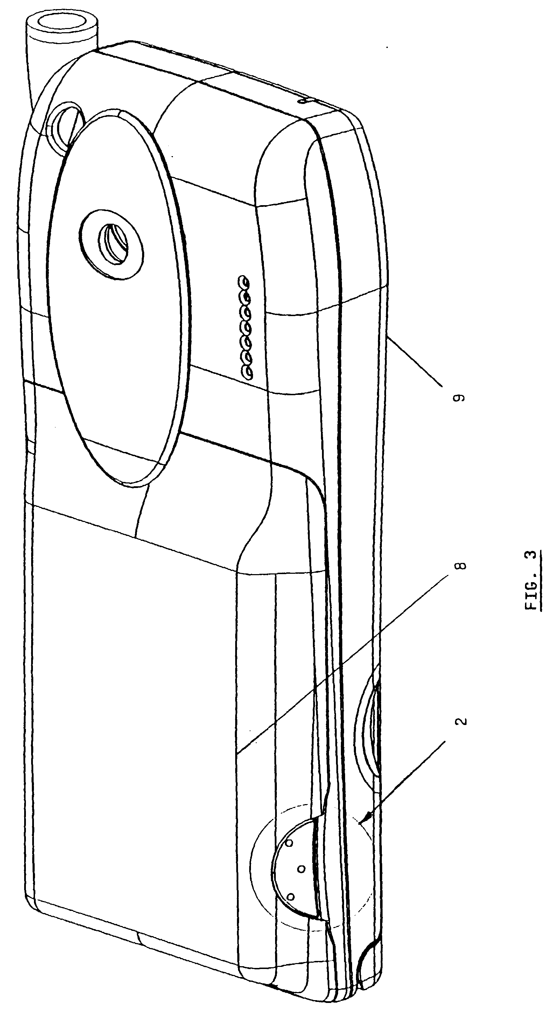

Fig. 3 zeigt eine perspektivische Ansicht eines tragbaren Telefons bestehend aus einem Gehäuse 9 und einem daran angeordneten Batteriegehäuse 8. In dem Gehäuse 8 der Batterieeinheit ist der erfindungsgemäße Verschluß 1 angeordnet Dabei ist zu erkennen, daß die Tastfläche 5 des Verschlusses 1 an die Kontur des Gehäuses 8 der Batterieeinheit angepaßt ist. Dadurch ist es möglich auf kleinstem Raum einen Schnapphakenverschluß 1 anzuordnen.

### Bezugszeichenliste

- 1: Verschluß
- 2: Schnapphakeneinheit
- 3: Schnapphaken
- 4: Rotationsachse
- 5: Tastfläche
- 6: Verschlußglied
- 7: Feder
- 8: Gehäuse der Batterieeinheit
- 9: Telefongehäuse

## Patentansprüche

1. Verschluß für ein tragbares Telefon, der eine Verriegelung durch das Ineinandergreifen eines Schnapphakens (3) in ein Verschlußglied (6) unter dem Einfluß einer Federkraft (7) bewirkt,
**dadurch gekennzeichnet**, daß
der Schnapphaken (3) fest mit einer Rotationsachse (4) verbunden ist.

2. Verschluß nach Anspruch 1, **dadurch gekennzeichnet**, daß der Verschluß eine Tastfläche (5) aufweist, die fest mit der Rotationsache (4) verbunden ist und mit dem Schnapphaken (3) einen Winkel > 0° bildet.

3. Verschluß nach Anspruch 2, **dadurch gekennzeichnet**, daß der Schnapphaken (3), die Rotationsachse (4) und die Tastfläche einstückig ausgebildet sind.

4. Batterieeinheit eines tragbaren Telefons mit einer Verschlußeinheit nach einem der Ansprüche 1 bis 3.

5. Batterieeinheit nach Anspruch 4, **dadurch gekennzeichnet**, daß die Tastfläche (5) zum Lösen der Verriegelung an die Kontur des Gehäuses (8) einer Batterieeinheit angepaßt ist.

6. Tragbares Telefon mit einer Batterieeinheit nach einem der Ansprüche 4 oder 5.

7. Tragbares Telefon nach Anspruch 6, **dadurch gekennzeichnet**, daß das Verschlußglied (6) am Gehäuse (9) des tragbaren Telefons angeordnet ist.
